# FASCICULE DE BREVET EUROPEEN

(11) **EP 0 852 306 B1**
(45) Date de publication et mention de la délivrance du brevet: **27.03.2002**
(21) Numéro de dépôt: 97403145.2
(22) Date de dépôt: 23.12.1997
(51) Int. Cl.: F16H 39/02, F04C 2/14, F04C 15/04

(54) **Moteur-variateur hydraulique à engrenages**
Regelbarer, hydraulischer Getriebemotor
Geared variable hydraulic motor

(30) Priorité: 03.01.1997 FR 9700028
(43) Date de publication de la demande: 08.07.1998
(73) Titulaire: INSTITUT FRANCAIS DU PETROLE, 92852 Rueil-Malmaison Cedex (FR); Coeuret, Bernard, 14310 Villers Bocage (FR)
(72) Inventeur: Coeuret, Bernard, 14310 Villers Bocage (FR); Renot, André, 95130 Franconville (FR)

(56) Documents cités:
- US-A- 3 506 081
- US-A- 3 688 648
- US-A- 3 724 975
- US-A- 3 833 317

## Description

La présente invention concerne un moto-variateur hydraulique recevant un fluide moteur et fournissant un couple.

Il existe différents types de moteurs hydrauliques comme par exemple des moteurs de type « Poclain » ou « Hydroland », composés d'un rotor formant des cylindres dans lesquels se déplacent des pistons commandant un vilebrequin, à la manière d'un moteur à combustion interne monté en étoile.

Toutefois, de manière générale, ces moteurs sont relativement compliqués dans leur réalisation.

On connaît le brevet US 3 833 317 qui décrit un moteur hydraulique comprenant un ensemble épicycloïdal capable de fonctionner avec uniquement deux vitesses de rotation prédéterminées.

Comme cela est mieux décrit dans le document précité un moto-réducteur avec un ensemble épicycloïdal comprend :
- un planétaire,
- au moins deux satellites,
- une couronne,
- un secteur intermédiaire en forme de quadrilatère curviligne occupant le volume compris entre les côtés en regard du planétaire, des deux satellites voisins et de la couronne, en épousant leur contour et en définissant avec eux des chemins de circulation du fluide moteur,
- les jonctions entre le planétaire, les satellites voisins et la couronne étant étanches au fluide moteur,
- les deux arrivées et les deux retours du fluide moteur étant prévus dans le secteur, à proximité des jonctions, les arrivées et les retours étant situés chaque fois au niveau de deux sommets opposés du quadrilatère curviligne formé par le secteur,
- une alimentation commandée des arrivées et des retours, reliée au circuit hydraulique.

Dans le document US-A-3 724 975, il est décrit un moto-variateur dans lequel les arrivées et les retours du fluide de commande peuvent être reliées en parallèle ou en série pour modifier le couple en sortie.

Dans cette configuration connue, le moto-variateur peut être gravement endommagé lors de l'inversion du mouvement de rotation, notamment par un phénomène du "coup du bélier".

De façon particulièrement avantageuse, la présente invention a pour objet un moteur hydraulique à engrenage susceptible de fournir un couple de sortie variable, ainsi que des vitesses de fonctionnement variables.

Le moto-variateur selon l'invention est d'une construction extrêmement simple ; il présente une rotation réversible en toute sécurité et permet de fournir un couple variable par palier.

Selon la présente invention, le moto-variateur est caractérisé en ce que :
- l'alimentation commandée relie les arrivées et les retours en parallèle ou en série ou suivant une combinaison intermédiaire entre un branchement totalement en série et un branchement totalement en parallèle pour modifier le couple fourni en sortie et en ce que
- l'alimentation commandée comprend un dispositif régulateur qui en cas d'inversion de mouvement commande automatiquement le branchement des moteurs en parallèle quelle que soit leur position de branchement avant l'inversion du mouvement.

Le branchement des différentes alimentations et retour, soit totalement en parallèle, soit totalement en série, soit dans des combinaisons intermédiaires, permet un grand nombre de couples de sortie tout en permettant à la pompe alimentant le circuit hydraulique de fonctionner à vitesse régulière et le dispositif régulateur permet d'éviter des dommages graves au moto-variateur en cas d'inversion du mouvement.

Cela est particulièrement important pour des équipements portés comme par exemple des équipements de tracteurs agricoles ou similaires.

Suivant d'autres caractéristiques avantageuses de l'invention :
- l'alimentation commandée comprend un inverseur de mouvement notamment en forme de distributeur à tiroir à deux positions.
- le dispositif régulateur est composé d'un tiroir à plages d'ouverture (P1, P2, P3), de longueurs différentes, ce tiroir étant positionné par une commande mais son extrémité non reliée à la commande est soumise à la pression régnant dans une chambre de ce dispositif régulateur, cette chambre étant reliée à l'une des conduites (L1, L2) de l'inverseur et l'autre extrémité du distributeur est poussée par un ressort prenant appui sur l'organe de commande, de façon que le coup de bélier engendré au moment de l'inversion de passage de fluide par l'inverseur, dans la chambre, commande le déplacement du tiroir contre la force développée par le ressort appuyant sur l'autre extrémité pour mettre automatiquement tous les moteurs (M1, M2, M3) en parallèle quel que soit le schéma de branchement de ces moteurs avant l'inversion.

De façon préférée, un rapport de démultiplication de 1/4 est obtenu, avec un planétaire de 18 dents, trois satellites de 9 dents et une couronne de 36 dents.

Selon un arrangement particulier, les satellites présentent des canaux radiaux reliant le fond d'une dent au palier dudit satellite afin de réaliser un équilibrage hydrodynamique desdits paliers.

La présente invention sera décrite ci-après de manière plus détaillée à l'aide des dessins annexés dans lesquels :
- la figure 1 est un schéma de principe du moto-variateur hydraulique selon l'invention,
- la figure 2 est une vue de principe d'un moto-variateur selon l'invention à trois satellites et à branchement des moteurs en parallèle,
- les figures 3A, 3B montrent le détail d'un branchement en parallèle et le moyen pour le réaliser,
- la figure 4B montre un branchement d'un moteur en série et le moyen pour le réaliser,
- les figures 5A-5D montrent différentes possibilités de branchement de quatre moteurs entre un branchement totalement en parallèle et un branchement totalement en série,
- les figures 6 et 7 montrent respectivement une vue de dessus, couvercle enlevé, et une vue en coupe d'un moto-variateur hydraulique selon l'invention à trois satellites,
- les figures 8A, 8B montrent un dispositif régulateur pour l'inversion de marche, dans deux positions de fonctionnement.

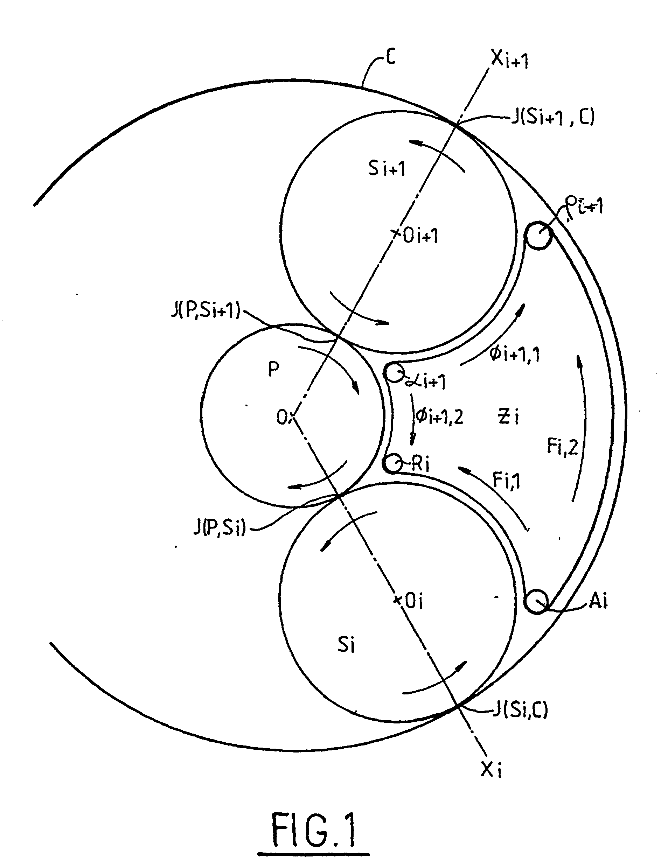

La figure 1 est un schéma d'un moto-variateur hydraulique à engrenages, montrant le principe de fonctionnement de ce dispositif.

Ce moto-variateur hydraulique se compose d'un planétaire P associé à deux satellites Si, Si+1 et à une couronne C ; ces différents éléments en forme de roues dentées engrènent les uns avec les autres.

La cavité définie par les secteurs curvilignes en regard du planétaire P, des satellites Si, Si+1 et de la couronne, loge un segment intermédiaire Zi à côtés curvilignes adaptés aux contours du planétaire P, des satellites Si, Si+1 et de la couronne C. Ce segment intermédiaire forme des chemins de circulation de fluide moteur par ses côtés respectifs, et chaque fois avec le planétaire P, les satellites Si, Si+1 et la couronne C.

Chaque segment intermédiaire Zi doit présenter des côtés curvilignes qui épousent parfaitement le contour des différents engrenages qui coopèrent avec ces côtés curvilignes. Ceci est nécessaire pour la maîtrise des fuites. Le fluide moteur doit en effet circuler entre les dents des engrenages mais ne doit pas s'en échapper.

Par ailleurs, afin de limiter au maximum les fuites, les satellites doivent tourner aussi vite que possible afin que le fluide moteur soit transporté rapidement à travers les chemins de circulation, sans avoir le temps de s'échapper à l'extérieur. La vitesse de rotation est donc aussi un paramètre à prendre en compte.

Chaque segment intermédiaire Zi comporte également des arrivées et sorties de fluide moteur, schématiquement à chacun de ses quatre sommets.

Ainsi, il est prévu une arrivée Ai et un retour Ri associés au satellite Si. L'arrivée Ai se trouve à la jonction du satellite Si et de la couronne C ; le retour Ri se trouve à la jonction du satellite Si et du planétaire P.

De même, il est prévu une arrivée αi+1 à la jonction du satellite Si+1 et du planétaire P et un retour ρi+1 à la jonction du satellite Si+1 et de la couronne C.

Il est à souligner que les arrivées Ai, αi+1 et les retours Ri, ρi+1 sont interchangeables puisqu'ils dépendent du sens de circulation du fluide moteur. Les arrivées définissent un sens de rotation relative du planétaire, des satellites et de la couronne. Une inversion du sens de circulation du fluide moteur implique que l'arrivée du fluide devient le retour et inversement ; cela inverse le sens de rotation de la sortie du moto-variateur.

Le planétaire P, les satellites Si, Si+1 et la couronne C sont des dispositifs dentés qui engrènent les uns avec les autres. Les engrenages sont taillés pour que leurs zones d'engrènement, au niveau de l'intersection avec les droites OXi, OXi+1 passant par les centres des différents engrenages P, Si, Si+1, C, constituent une barrière pratiquement étanche au fluide. En outre la surface extérieure des dents des engrenages est préférentiellement rainurée selon un profil particulier afin de répartir convenablement le fluide.

Sur la droite OXi passant par les centres O, Oi du planétaire P et du satellite Si et coupant la couronne C, est défini un point de jonction J(P,Si) entre le planétaire P et le satellite Si de même qu'un point de jonction J(Si,C) entre le satellite Si et la couronne C. Ces points de jonction constituent des barrières pratiquement étanches au liquide.

Il en est de même de la droite OXi+1 passant par le centre O du planétaire P et le centre Oi+1 du satellite Si+1 et coupant la couronne C. Sur cette droite se trouvent le point de jonction J(P,Si+1) correspondant au contact entre le planétaire P et le satellite Si+1 de même que le point de jonction J(Si+1,C) entre le satellite Si+1 et la couronne C. Ces deux points constituent également des barrières étanches.

Dans ces conditions, le système compris entre les deux lignes d'axe OXi, OXi+1 ci-dessus passant d'une part par le centre du planétaire P et le centre du satellite Si ou le centre du satellite Si+1, constitue un système fermé ; cela signifie que, dans la mesure où le fluide moteur est un liquide, le débit entrant dans ce système est égal au débit sortant, le liquide étant incompressible.

Comme les engrenages deux à deux en prise tournent dans le même sens deux à deux les arrivées/sorties ne peuvent être situées qu'aux sommets du secteur Zi, près des jonctions J(P, Si), J(Si, C), J(Si+1, C), J(P, Si+1) et les arrivées/sorties sont situées chaque fois aux sommets opposés du quadrilatère formant le secteur Zi.

Il convient également de remarquer que nécessairement les satellites Si et Si+1 sont des engrenages identiques, c'est-à-dire ayant le même nombre de dents et le même diamètre.

Dans ces conditions, le moto-variateur hydraulique représenté à la figure 1 fonctionne de la manière suivante :

Le fluide moteur de l'arrivée Ai se répartit entre un débit Fi,1 entraînant le satellite Si dans le sens de la flèche et circulant vers le retour Ri et un débit Fi,2 entraînant la couronne C en direction du retour ρi+1.

De même, l'arrivée Ai+1 fournit un débit de liquide Φi+1 entraînant le satellite Si+1 en direction de la sortie ρi+1 et un débit Φi+1,2 entraînant le planétaire P en direction du retour Ri.

Comme les satellites Si et Si+1 tournent nécessairement à la même vitesse et que ces satellites sont identiques, les débits de fluide qui leur sont associés Fi,1 et Φi+1,1 sont égaux.

Dans ces conditions, les débits Fi,2 et Φi+1,2 sont directement liés au nombre de dents de la couronne C et du planétaire P compris entre les axes OXi et OXi+1. Comme les dents du planétaire P et de la couronne C sont identiques puisque le planétaire P et la couronne C engrènent avec les satellites Si, Si+1, la vitesse de rotation relative du planétaire P et de la couronne C est inversement proportionnelle à leur diamètre puisque le diamètre est proportionnel lui-même au nombre de dents portées par ces trois engrenages.

Si la sortie du couple (ou du mouvement) se fait par le planétaire P, on a un premier rapport de démultiplication correspondant au rapport des rayons des dentures du planétaire P et du satellite Si.

Si la sortie du couple se fait par la couronne C, on a un deuxième rapport de démultiplication.

Un moyen mécanique approprié permet de claveter soit la couronne soit le planétaire sur l'arbre de sortie du système.

Un rapport de démultiplication préféré est de 1/4, avec trois satellites ayant chacun 9 dents, un planétaire de 18 dents et une couronne de 36 dents. Ce rapport autorise un couple de démarrage important, compatible avec un nombre de dents des satellites facilement usinable.

Selon une autre caractéristique de l'invention, le rapport de démultiplication dépend également de l'alimentation des arrivées Ai, αi suivant que cette alimentation se fait en parallèle ou en série.

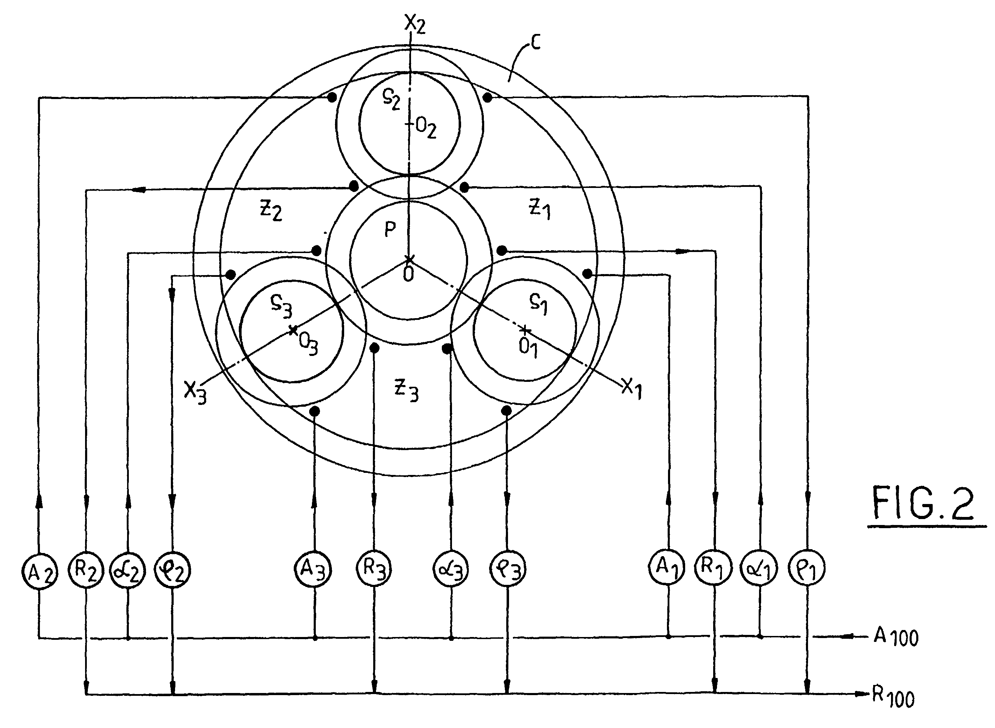

La figure 2 montre un moto-variateur hydraulique à trois satellites Si, S2, S3. Les différentes entrées et sorties A1, R1, α1, ρ1, A2...ont été représentées sur les lignes qui arrivent directement sur les entrées et les sorties dans les secteurs Z1, Z2, Z3. Les axes de séparation OX1, OX2, OX3 ont également été représentés.

Selon le schéma représenté à la figure 2, le motovariateur est alimenté en parallèle, c'est-à-dire que les alimentations A1, A2, A3, α1, α2, α3 sont branchées en parallèle. Il en est de même des retours R1, R2, R3, ρ1, ρ2, ρ3. L'alimentation commune porte la référence A100 et le retour commun la référence R100.

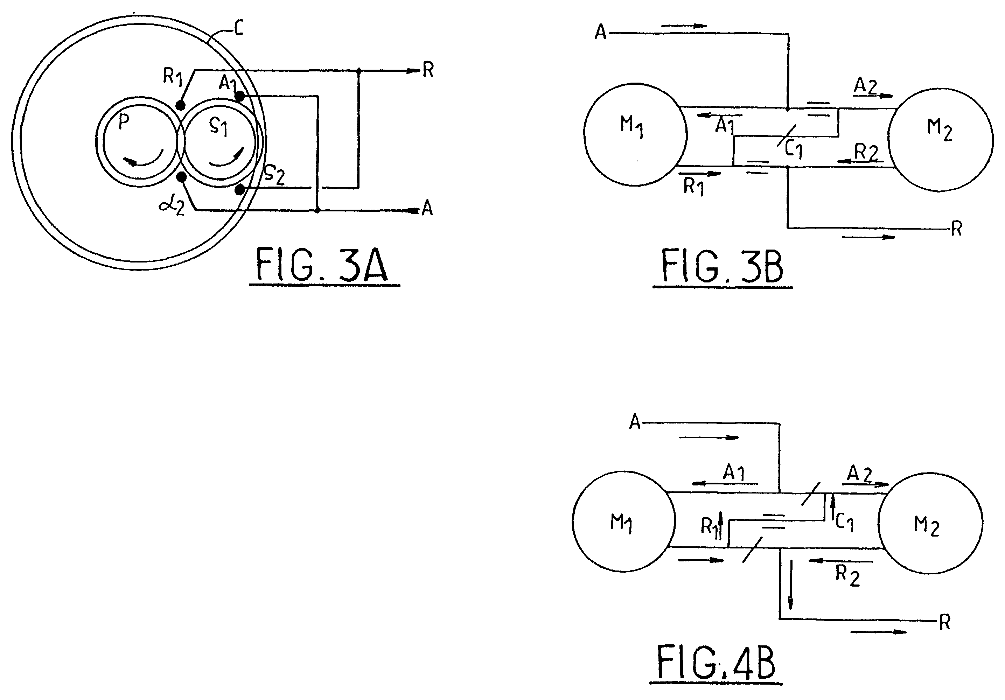

La figure 3A montre schématiquement le branchement en parallèle de part et d'autre d'un satellite par exemple le satellite S1. L'alimentation A est reliée à l'arrivée α2 qui entraîne le satellite Si dans le sens de la flèche indiquée ; le débit arrive au retour ρ2 du satellite Si. Ce retour ρ2 est relié à la sortie R.

Une autre branche de l'alimentation A est reliée à l'arrivée A1 et le retour correspondant R1 est branché au retour général R.

Les figures 3B, 4B montrent le branchement pour passer du mode parallèle au mode série.

L'arrivée A1 et le retour R1 correspondent à un "satellite-moteur" figuré schématiquement sous la référence M1 ; l'arrivée A2 et le retour R2 correspondent au "satellite-moteur" représenté schématiquement par la référence M2.

La ligne d'alimentation A est reliée par un embranchement aux deux lignes A1, A2 alimentant respectivement les "satellites-moteurs" M1, M2 dont les retours R1, R2 sont reliés au retour général R.

La connexion C1 entre l'arrivée A2 et le retour R1 est fermée. L'alimentation se fait donc en parallèle.(Fig. 3B)

Par contre, à la figure 4B, en utilisant les mêmes références, le branchement de l'arrivée A2 est coupé de l'alimentation A ; il en est de même de la liaison entre le retour R1 et le retour général R. Par contre, la connexion C1 est ouverte. Le fluide moteur circule donc dans le sens indiqué par les flèches en passant en série à travers les "satellites-moteurs" M1, M2, c'est-à-dire en suivant les chemins A1 M1, R1, C1, A2, M2, R2, R.

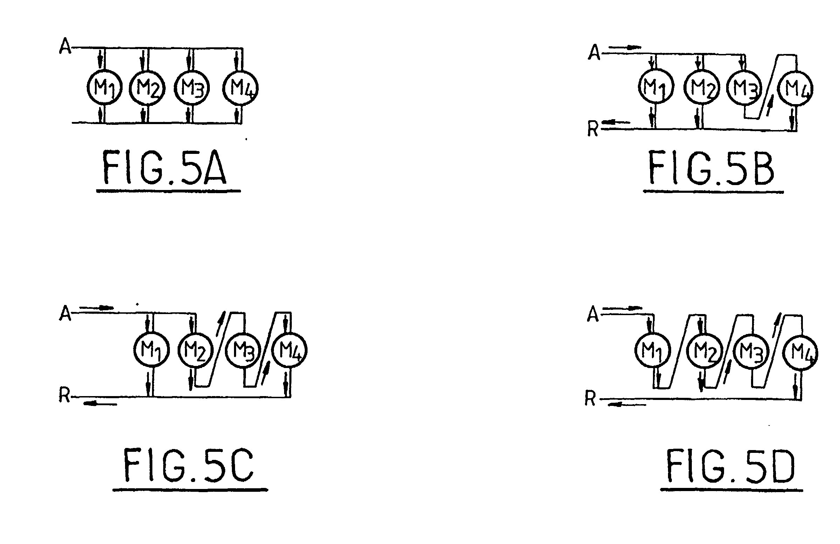

Les figures 5A, 5B, 5C, 5D montrent schématiquement comment brancher quatre "satellites-moteurs" M1, M2, M3, M4 pour passer d'un branchement en parallèle complet à un branchement en série complet.

Les "satellites-moteurs" Mi représentés dans ces différentes figures correspondent aux "satellites-moteurs" M1, M2, etc...décrits ci-dessus, c'est-à-dire correspondant chaque fois à une arrivée et à une sortie de fluide moteur.

Dans les différentes figures 5A-5D, les "satellites-moteurs" sont d'abord branchés en parallèle entre l'arrivée A et le retour R (figure 5A) puis les "satellites-moteurs" M3, M4 sont branchés en série, ce groupe (M3, M4) étant lui-même en parallèle sur les "satellites-moteurs" M1, M2 (figure 5B).

A la figure 5C on franchit une étape suivante puisque le "satellite-moteur" M2 est également branché en série sur les "satellites-moteurs" M3, M4 et cet ensemble (M2, M3, M4) de trois "satellites-moteurs" en série est globalement branché en parallèle sur le "satellite-moteur" M1, entre l'arrivée A et le retour R de fluide (figure 5C).

Enfin, dans la quatrième possibilité, tous les "satellites-moteurs" M1, M2, M3, M4 sont branchés en série entre l'arrivée A et le retour R.

De manière générale, les branchements en parallèle divisent le débit d'arrivée entre les différentes branches ce qui donne en sortie une vitesse plus faible mais un couple plus élevé. Par contre, le branchement en série (figure 5D) fait passer tout le fluide moteur à travers tous les "satellites-moteurs" : la vitesse de rotation en sortie est plus élevée mais le couple plus faible.

Les branchements intermédiaires des figures 5B, 5C représentent des étapes intermédiaires entre les figures 5A et 5D, c'est-à-dire des couples intermédiaires et des vitesses intermédiaires.

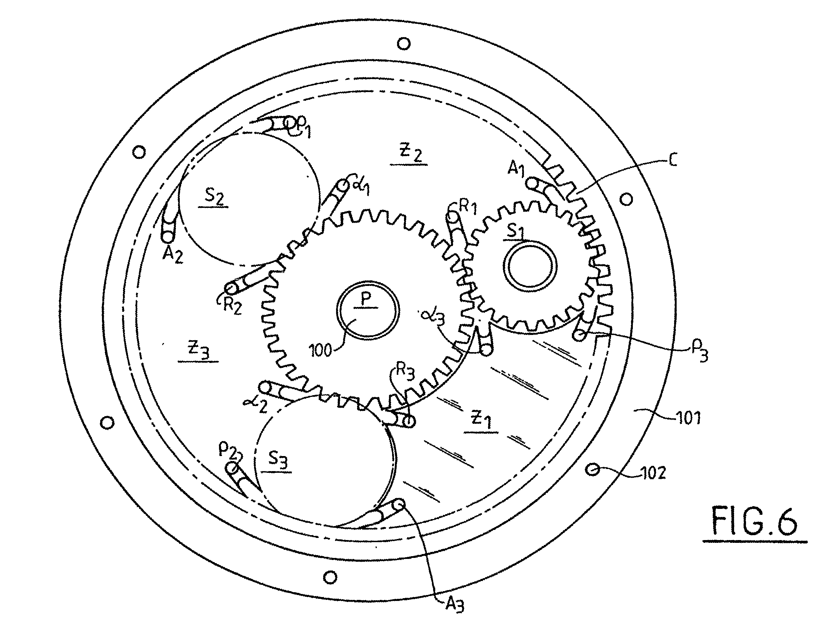

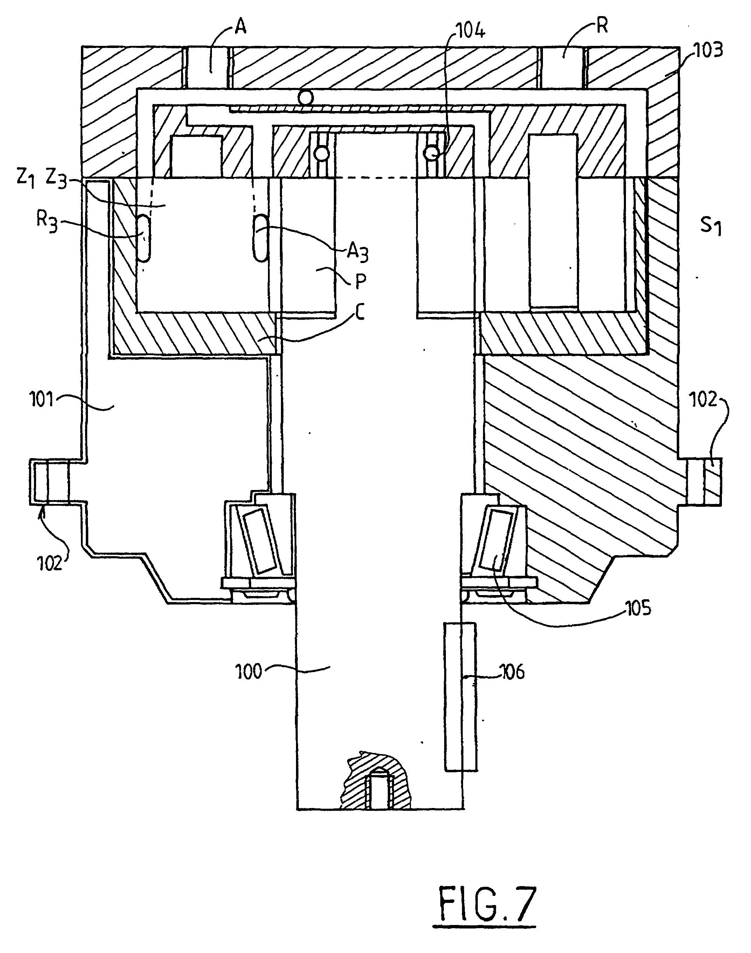

Les figures 6 et 7 montrent un mode de réalisation en vue en plan et en vue en coupe d'un moto-variateur à un engrenage planétaire P, trois engrenages satellites S1, S2, S3 et un engrenage en couronne C.

Les satellites sont séparés comme précédemment par des secteurs Z1, Z2, Z3.

Cette figure 6 correspond pratiquement aux figures 1 et 2.

La figure 7 est une vue en coupe du dispositif de la figure 6. Cette figure montre le planétaire P porté par l'axe de sortie 100, engrenant avec le satellite S1. Le satellite S3 n'a pas été représenté mais seulement la cavité qui le reçoit. Cette cavité est délimitée par les deux secteurs Z1, Z3 et la couronne C ainsi que le planétaire P.

La couronne C est logée dans le carter 101 muni d'une bride de montage 102.

L'ensemble ainsi décrit est fermé par un couvercle 103 avec un ajutage d'entrée général A et un ajutage de retour R ; les différents canaux de distribution (non référencés) débouchent dans les lumières comme celles (A3, R3) représentées à titre d'exemple. Ces canaux de distribution auront une section adaptée à la cylindrée du moteur c'est-à-dire au couple et/ou à la vitesse d'utilisation du moteur. Des sections plus importantes seront choisies lorsque des couples et des vitesses plus élevés devront être développés. En effet le couple est proportionnel au rapport pression-surface. La surface étant la surface exposée qui dépend du nombre de dents du satellite, de leur géométrie.

La figure 7 montre également les différents roulements 104, 105 et la clavette 106 de l'axe 100. La couronne C engrène avec l'axe 100 par des cannelures non référencées.

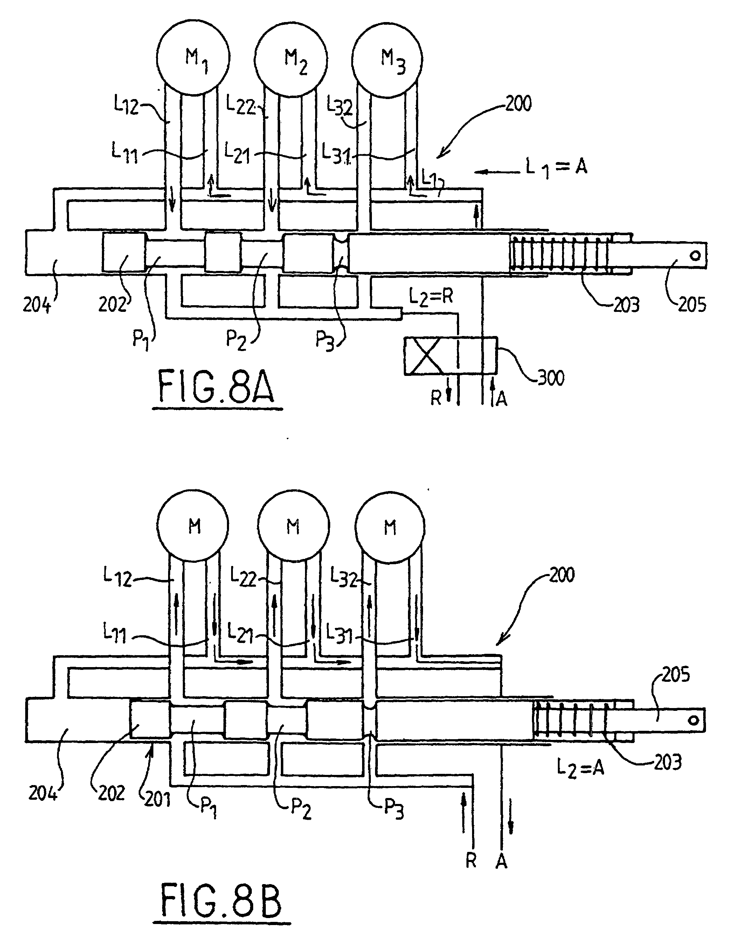

Les figures 8A, 8B montrent un dispositif régulateur 200 permettant de régulariser le fonctionnement lors d'une inversion de mouvement. L'inverseur de mouvement 300 est représenté sous la forme d'un distributeur à tiroir à deux positions reliant l'arrivée A et le retour R aux conduits (L1, L2) ou (L2, L1). Le dispositif 200 est représenté en liaison avec trois "satellites-moteurs" M1, M2, M3 comme ceux décrits ci-dessus. Ces "satellites-moteurs" M1, M2, M3 sont reliés respectivement à la conduite L1, par les conduites L11, L21, L31 et à la conduite L2, par les conduites L12, L22, L32. Le branchement à la conduite L2 se fait par l'intermédiaire d'un distributeur 201 à tiroir 202. Le tiroir 202, qui a des plages P1, P2, P3, est soumis à l'action d'un ressort de rappel 203 et de la pression de fluide dans une chambre 204.

Le tiroir 202 est normalement positionné par l'intermédiaire de sa tige 205. Il peut néanmoins s'escamoter par rapport à la tige 205 en comprimant le ressort 203. Ce mouvement d'escamotage se produit lorsque la pression dans la chambre 204 devient rapidement trop importante au moment d'une inversion de mouvement du moto-réducteur.

Le but de ce déplacement du tiroir 202 par rapport à la position réglée par la tige de commande 205 en comprimant le ressort 203, c'est-à-dire vers la droite de la figure 8B, est de brancher les "satellites-moteurs" M1, M2, M3 en parallèle au moment d'une inversion de sens de marche. Cette inversion de sens de marche consiste à intervertir l'alimentation et le retour entre les conduites L1, L2. Il se produit à ce moment un coup de bélier qui peut être très dangereux si le moteur tourne rapidement. De ce fait, le déplacement du tiroir 202 vers la droite, dans la position représentée à la figure 8B, sous l'effet de l'augmentation de pression ainsi induite dans la chambre 204, provoque la mise en parallèle des branchements grâce aux plages P1, P2, P3 du tiroir 202.

On arrive par exemple dans cette position, en partant de celle réglée par la manette 205 à la figure 8A ; dans cette position le tiroir 202 branche en parallèle les "satellites-moteurs" M1, M2 alors que le "satellite-moteur" M3 est coupé.

Dans cette figure 8A, la conduite L1 correspond à l'arrivée A et la conduite L2 au retour R.

Si maintenant on inverse l'arrivée et le retour, la conduite L2 devenant l'arrivée et la conduite L1 le retour R (fig. 8B), le tiroir 202 est repoussé rapidement vers la droite de manière à mettre en parallèle les trois "satellites-moteurs" M1, M2, M3 comme cela est indiqué à la figure 8B de manière à le faire tourner plus lentement.

Il est important que les arrivées (Ai, αi+1) du fluide moteur sur un même segment Zi soient diamétralement opposées de même que les retours (Ri, ρi+1). Ceci contribue à équilibrer les satellites Si dans chaque cas de fonctionnement possible, c'est-à-dire à la fois lorsque le moto-variateur est alimenté en série et lorsqu'il est alimenté en parallèle.

Par ailleurs chaque satellite présente un palier lubrifié grâce à des canaux de liaison qui s'étendent radialement du palier jusqu'au creux d'une dent du satellite. Préférentiellement trois canaux sont prévus, à 120° les uns des autres. Un film d'huile est ainsi créé tout autour du palier. Ceci permet une lubrification régulièrement répartie, avec un équilibrage hydrodynamique.

Au niveau des surfaces de contact des dents des engrenages, les surfaces extérieures des dents peuvent être rainurées selon un profil particulier. Ceci permet d'augmenter par une meilleure lubrification la durée de vie de ces engrenages.

## Revendications

1. Moto-variateur hydraulique à engrenages, alimenté en fluide moteur et fournissant un couple et une vitesse variables, avec un ensemble épicycloïdal comprenant :
- un planétaire (P),
- au moins deux satellites (Si, Si+1),
- une couronne (C),
- un secteur intermédiaire (Zi) en forme de quadrilatère curviligne occupant le volume compris entre les côtés en regard du planétaire (P), des deux satellites (Si, Si+1) voisins et de la couronne (C), en épousant leur contour et en définissant avec eux des chemins de circulation du fluide moteur,
- les jonctions (J(P, Si) J(Si, C) J(Si+1, C) J(P, Si+1))), entre le planétaire (P), les satellites voisins (Si, Si+1) et la couronne (C) étant étanches au fluide moteur,
- les deux arrivées (Ai, αi+1) et les deux retours (Ri, ρi+1) du fluide moteur étant prévus dans le secteur (Zi), à proximité des jonctions (J(P, Si), J(Si, C), J(Si+1, C), J(P, Si+1)), les arrivées (Ai, αi+1) et les retours (Ri, ρi+1) étant situés chaque fois au niveau de deux sommets opposés du quadrilatère curviligne formé par le secteur (Zi),
- une alimentation (arrivée A, retour R) commandée des arrivées (Ai, αi+1) et des retours (Ri, ρi+1) reliée au circuit hydraulique, **caractérisé en ce que** ladite alimentation permet de relier les arrivées (Ai, αi+1) et les retours (Ri, ρi+1) en parallèle ou en série ou suivant une combinaison intermédiaire entre un branchement totalement en série et un branchement totalement en parallèle pour modifier le couple fourni en sortie et **en ce que** l'alimentation commandée comprend un dispositif régulateur (200) qui en cas d'inversion de mouvement commande automatiquement le branchement des moteurs (Mi) en parallèle quelle que soit leur position de branchement avant l'inversion du mouvement.

2. Moto-variateur selon la revendication 1, **caractérisé en ce que** l'alimentation commandée comprend un inverseur de mouvement (300) notamment en forme de distributeur à tiroir à deux positions.

3. Moto-variateur selon la revendication 1, **caractérisé en ce que** le dispositif régulateur (200) comprend un tiroir (202) à plages d'ouverture (P1, P2, P3), de longueurs différentes, ce tiroir étant positionné par une tige de commande (205) dont l'extrémité non reliée à la commande est soumise à la pression régnant dans une chambre (204) dudit dispositif régulateur, la chambre (204) étant reliée à l'une des conduites (L1, L2) de l'inverseur (300) et l'autre extrémité du distributeur étant poussée par un ressort (203) prenant appui sur l'organe de commande (205), de façon que le coup de bélier engendré au moment de l'inversion de passage de fluide par l'inverseur (300), dans la chambre (204), commande le déplacement du tiroir (202) contre la force développée par le ressort (203) appuyant sur l'autre extrémité pour mettre automatiquement tous les "satellites-moteurs" (M1, M2, M3) en parallèle quel que soit le schéma de branchement de ces "satellites-moteurs" avant l'inversion.

4. Moto-variateur selon l'une quelconque des revendications précédentes, **caractérisé en ce qu'**il présente préférentiellement un rapport de démultiplication de 1/4.

5. Moto-variateur selon la revendication 4, **caractérisé en ce qu'**il comporte trois satellites ayant chacun 9 dents, un planétaire de 18 dents et une couronne de 36 dents.

6. Moto-variateur selon l'une quelconque des revendications précédentes, **caractérisé en ce que** les satellites présentent des canaux radiaux reliant le fond d'une dent au palier dudit satellite afin de réaliser un équilibrage hydrodynamique desdits paliers.

7. Moto-variateur selon la revendication 6, **caractérisé en ce que** lesdits canaux radiaux sont angulairement espacés de 120° les uns des autres.

## Patentansprüche

1. Hydraulischer Motorvariator mit Getriebesatz, dem Antriebsfluid zugeführt wird und der ein Kraftmoment und eine Geschwindigkeit ergibt, die variabel sind, mit einer epizykloidalen Anordnung, umfassend:
- ein Zentralrad (P),
- wenigstens zwei Satellitenräder (Si, Si+1),
- einen Kranz (C),
- einen Zwischenbereich (Zi) in Form eines Kurvenlinientrapezes, der das Volumen, zwischen den gegenüberliegenden Seiten des Zentralrades (P), der beiden benachbarten Satellitenräder (Si, Si+1) und dem Kranz (C) unter Annahme von deren Kontur einnimmt und indem mit ihnen Zirkulationswege der Motorflüssigkeit definiert werden,
- Verbindungen (J(P, Si) J(Si, C) J(Si+1, C) J(P, Si+1)), zwischen dem Zentralrad (P) und den benachbarten Satellitenrädern (Si, Si+1) und dem Kranz (C), die gegen das Antriebsfluid abdichtend ausgebildet sind,
- die beiden Eingänge (Ai, αi+1) und die beiden Rückläufe (Ri, ρi+1) des Antriebsfluids, welche in dem Bereich (Zi) in der Nähe der Verbindungen (J(P, Si), J(Si, C), J(Si+1, C), J(P, Si+1)) vorgesehen sind, wobei die Eingänge (Ai, αi+1) und die Rückläufe (Ri, ρi+1)jeweils auf dem Niveau der beiden gegenüberliegenden Spitzen des durch den Bereich (Zi) gebildeten Kurvenlinientrapezes angeordnet sind,
- eine Zufuhr (Eingang A, Rücklauf R), die von den Eingängen (Ai, αi+1) und den Rückläufen (Ri, ρi+1) gesteuert wird, welche mit dem hydraulischen Kreislauf verbunden ist, **dadurch gekennzeichnet, dass** diese Zufuhr es ermöglicht, die Eingänge (Ai, αi+1) und die Rückläufe (Ri, ρi+1) parallel oder in Reihe oder gemäß einer Zwischenkombination zwischen einem Anschluss vollständig in Reihe und einem vollständig parallelen Anschluss anzuordnen, um das am Ausgang gelieferte Kraftmoment zu modifizieren und dadurch, dass die gesteuerte Zufuhr eine Steuervorrichtung (200) umfasst, die im Fall einer Bewegungsumkehr automatisch den Anschluss der Motoren (Mi) parallel unabhängig von deren Anschlussstellung vor der Bewegungsumkehr automatisch steuert

2. Motorvariator nach Anspruch 1, **dadurch gekennzeichnet, dass** die gesteuerte Zufuhr einen Bewegungsinverter (300), insbesondere in Form eines Schiebeverteilers mit zwei Positionen hat.

3. Motorvariator nach Anspruch 1, **dadurch gekennzeichnet, dass** die Steuervorrichtung (200) einen Schieber (202) mit Öffnungsbereichen (P1, P2, P3) unterschiedlicher Längen hat, wobei dieser Schieber durch einen Steuerschieber (205), positioniert wird, dessen nicht mit der Steuerung verbundenes Ende dem in der Kammer (204) der Steuervorrichtung herrschenden Druck unterliegt, wobei die Kammer (204) mit einer der Leitungen (L1, L2) des Inverters (300) verbunden ist und das andere Ende des Verteilers durch eine Feder (203) vorgeschoben wird, die sich derart gegen das Steuerorgan (205) abstützt, dass der zum Zeitpunkt des Umkehr des Fluiddurchgangs durch den Inverter (300) in der Kammer (204) erzeugte Druckstoß die Bewegung des Schiebers (202) gegen die von der Feder (203) erzeugte Kraft steuert, die sich gegen das andere Ende abstützt, um automatisch alle 'Sattelitenmotoren' (M1, M2, M3) unabhängig vom Anschlussschema dieser 'Sattelitenmotoren' vor der Umkehr parallel zu stellen.

4. Motorvariator nach einem der vorhergehenden Ansprüche, **dadurch gekennzeichnet, dass** er vorzugsweise ein Untersetzungsverhältnis von ¼ aufweist.

5. Motorvariator nach Anspruch 4, **dadurch gekennzeichnet, dass** er 3 Sattelitenräder mit jeweils 9 Zähnen, ein Zentralrad mit 18 Zähnen und einen Kranz mit 36 Zähnen umfasst.

6. Motorvariator nach einem der vorhergehenden Ansprüche, **dadurch gekennzeichnet, dass** die Sattelitenräder radiale Kanäle aufweisen, die den tiefsten Teil eines Zahnes mit dem Lager des Sattelitenrades verbinden, um ein hydrodynamisches Gleichgewicht dieser Lager zu verwirklichen.

7. Motorvariator nach Anspruch 6, **dadurch gekennzeichnet, dass** diese radialen Kanäle mit 120° voneinander winkelbeabstandet sind.

## Claims

1. A geared variable hydraulic motor, supplied with driving fluid and providing variable torque and speed, with an epicyclic assembly comprising:
- a sun gear (P),
- at least two planet gears (Si and Si+1),
- a crown gear (C),
- an intermediate sector (Zi) in the form of a curved quadrilateral occupying the volume included between the facing sides of the sun gear (P), the two neighbouring planet gears (Si, and Si+1) and the crown gear (C), matching their contours and defining with them the circulation paths of the driving fluid,
- the contact points (J(P, Si), J(Si, C), J(Si+1, C) and J(P, Si+1)) between the sun gear (P), the neighbouring planet gears (Si, Si+1) and the crown gear (C) are sealed against the passage of driving fluid,
- the two feed points (Ai and αi+1) and the two return points (Ri and ρi+1) of the driving fluid are provided in the sector (Zi) close to the contact points (J(P, Si), J(Si, C), J(Si+1, C) and J(P, Si+1)), the feed points (Ai and αi+1) and the return points (Ri and ρi+1) being positioned in each case at the level of the two opposite apexes of the curved quadrilateral formed by the sector (Zi),
- a controlled supply (feed A, return R) for the feed points (Ai and αi+1) and the return points (Ri and ρi+1) connected to the hydraulic circuit, **characterised in that** the said supply allows the feed points (Ai and αi+1) and the return points (Ri and ρi+1) to be connected in parallel or in series or according to an intermediate combination between a connection totally in series and a connection totally in parallel in order to change the output torque provided and **in that** the controlled supply includes a regulating device (200) which in the case of a reversal of movement automatically sets the connection of the motors (Mi) to parallel whatever their connection position prior to the reversal of movement.

2. A variable motor according to Claim 1, **characterised in that** the controlled supply includes a movement reverser (300) particularly in the form of a two-position slide valve.

3. A variable motor according to Claim 1, **characterised in that** the regulating device (200) includes a slider (202) with open portions (P1, P2 and P3) of different lengths, this slider being positioned by a control rod (205) of which the end not connected to the control system is subjected to the pressure prevailing in a chamber (204) of the said regulating device, the chamber (204) being connected to one of the pipes (L1 and L2) of the reverser (300) and the other end of the valve being pushed by a spring (203) bearing against the control device (205) so that the impulse engendered at the moment when the reverser (300) reverses the passage of fluid in the chamber (204) makes the slider (202) move against the force produced by the spring (203) bearing on the other end to place automatically all the "planet motors" (M1, M2 and M3) in parallel whatever was the connection arrangement of these "planet motors" before the reversal.

4. A variable motor according to any one of the preceding Claims, **characterised in that** it preferably presents a reduction ratio of 1:4.

5. A variable motor according to Claim 4, **characterised in that** it has three planet gears of 9 teeth each, a sun gear with 18 teeth and a crown gear with 36 teeth.

6. A variable motor according to any one of the preceding Claims, **characterised in that** the planet gears have radial channels connecting the base of a tooth to the bearing of the said planet gear in order to achieve hydrodynamic balance between the said bearings.

7. A variable motor according to Claim 6, **characterised in that** the said radial channels are spaced at angular intervals of 120° from each other.
